(19) **Europäisches Patentamt European Patent Office Office européen des brevets**

(11) **EP 4 560 344 B1**

(12) **FASCICULE DE BREVET EUROPEEN**

(45) Date de publication et mention de la délivrance du brevet:
**03.06.2026 Bulletin 2026/23**

(21) Numéro de dépôt: **24212886.6**

(22) Date de dépôt: **14.11.2024**

(51) Classification Internationale des Brevets (IPC):
**G01S 3/04** *(2006.01)* **G01S 7/02** *(2006.01)*
**G01S 3/32** *(2006.01)* **G01S 3/48** *(2006.01)*
**G01S 3/74** *(2006.01)*

(52) Classification Coopérative des Brevets (CPC):
**G01S 3/043; G01S 7/021;** G01S 3/32; G01S 3/48; G01S 3/74

(54) **SYSTÈME RADAR ET PROCÉDÉ DE DÉTECTION DE CANAUX FRÉQUENTIELS OCCUPÉS**

RADARSYSTEM UND VERFAHREN ZUR ERKENNUNG VON BESETZTEN FREQUENZKANÄLEN

RADAR SYSTEM AND METHOD FOR DETECTING OCCUPIED FREQUENCY CHANNELS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.11.2023 FR 2312874**

(43) Date de publication de la demande:
**28.05.2025 Bulletin 2025/22**

(73) Titulaire: **THALES**
**92190 Meudon (FR)**

(72) Inventeurs:
• **COTTRON, Rodolphe**
**33700 MERIGNAC (FR)**
• **MAZEAU, Thierry**
**33700 MERIGNAC (FR)**
• **VEYRAC, Yoan**
**33700 MERIGNAC (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A1- 4 239 903 FR-A1- 3 073 627**
**US-A- 5 565 764**

## Description

### Domaine technique

La présente invention concerne de manière générale le domaine système antennaire multivoies passives, et en particulier un système radar et un procédé de détection de canaux fréquentiels occupés.

Un système antennaire peut être perturbé lorsqu'il est utilisé dans un environnement électromagnétique dense, c'est-à-dire comprenant de nombreux canaux fréquentiels dits occupés (ou pollués) associés chacun à des signaux électromagnétiques émis pouvant être réceptionnés par le système antennaire. La connaissance des canaux fréquentiels occupés permet à un opérateur de ce système antennaire d'optimiser l'exploitation des canaux fréquentiels en émission et/ou en réception en choisissant les canaux fréquentiels dits libres pour émettre un nouveau signal électromagnétique et/ou traiter des signaux d'intérêt.

Il existe aujourd'hui des systèmes de détection de canaux fréquentiels occupés, tels que des systèmes de renseignement d'origine électromagnétique (appelés également SIGINT pour *Signals Intelligence* selon l'acronyme anglo-saxon correspondant, ou ESM pour *Electronic Support Measures* selon l'acronyme anglo-saxon correspondant) permettant de détecter et de localiser des signaux électromagnétiques dans une très large gamme de fréquences.

Cependant, de tels systèmes présentent une complexité de mise en œuvre important et un coût de fabrication élevé. Ils présentent également de fortes contraintes en termes d'installation sur un système plus global tel qu'un véhicule aéroporté par exemple. En particulier, les systèmes existants présentent un fort encombrement, une masse importante et des spécifications coercitives concernant les zones d'installation spécifiques de ces systèmes sur un porteur comme un avion ou un hélicoptère.

Des exemples de systèmes de détection de canaux fréquentiels occupés ont été décrits dans les documents US 5 565 764 A, FR 3 073 627 A1, et EP 4 239 903 A1.

En outre, de tels systèmes installés sur un véhicule aéroporté présentent des résultats restreints en termes d'estimation de la direction d'arrivée d'un signal détecté, notamment parce que les antennes utilisés ont une directivité limitée.

Il existe ainsi un besoin pour un système et procédé de détection de canaux fréquentiels occupés amélioré.

### Résumé de l'invention

A cet effet, il est proposé un système radar de détection de canaux fréquentiels occupés, le système comprenant N voies de réception et un ensemble (10) d'antennes radar associées à chaque voie, N étant un entier supérieur ou égal à 2, chaque voie étant apte à recevoir respectivement des signaux au moyen de l'antenne radar associée. Le système radar comprend, pour chaque voie de réception, une unité de conversion dans le domaine spectral des signaux reçus pour former un signal converti défini sur une bande fréquentielle instantanée donnée associée à un ensemble de canaux fréquentiels, et un module de détermination de valeurs de corrélation adapté pour appliquer une corrélation de puissance entre le spectre du signal converti propagé sur la voie de réception et le spectre d'un signal de référence arbitraire choisi parmi un des signaux convertis propagés sur une des voies de réception. Le système radar comprend en outre un module d'évaluation de canaux fréquentiels occupés adapté pour déterminer les valeurs de la voie somme à partir des valeurs de corrélation des N voies de réception, le canal fréquentiel étant occupé si la valeur de la voie somme associée est supérieure à une valeur de seuil de détection prédéfinie.

Avantageusement, le module de détermination de valeurs de corrélation peut être configuré pour déterminer une densité spectrale de puissance du signal propagé sur la voie de réception par rapport au signal de référence arbitraire.

Dans des modes de réalisation, le module de détermination de valeurs de corrélation peut être configuré pour appliquer une intégration sur plusieurs trames successives du signal propagé sur la voie de réception.

Selon certains modes de réalisation, le système radar peut comprendre en outre un dispositif de calibrage comprenant N voies de calibrage. Pour chaque voie de calibrage, le dispositif de calibrage peut être configuré pour déterminer des valeurs de coefficient de correction du signal converti pour équilibrer en amplitude et en phase chacune des voies de réception du système radar.

Le système radar peut être configuré pour appliquer un balayage fréquentiel en répétant l'évaluation de la détection de canaux fréquentiels occupés par rapport à la valeur de seuil de détection, pour couvrir tout un domaine fréquentiel d'intérêt prédéfini.

Avantageusement, le système radar peut être configuré pour appliquer une direction d'antenne de pointage. Le module d'évaluation de canaux fréquentiels occupés peut être en outre adapté pour déterminer des valeurs de la voie écart à partir des valeurs de corrélation des N voies de réception, puis des valeurs du ratio de la voie écart à partir des valeurs de la voie somme et des valeurs de la voie écart, la direction d'antenne de pointage correspondant à la direction d'arrivée des signaux reçus par rapport à l'orientation des antennes du système radar si les valeurs du ratio de la voie écart sont inférieures à une valeur de seuil lobe prédéfini.

Le module d'évaluation de canaux fréquentiels occupés peut être en outre adapté pour déterminer au moins une direction affinée d'arrivée des signaux reçus par rapport à l'orientation des antennes du système radar à partir des valeurs du ratio de la voie écart et de la direction d'antenne de pointage.

Dans certains modes de réalisation, le système radar peut être configuré pour appliquer un balayage spatial en répétant l'évaluation de la direction d'arrivée des signaux reçus par rapport à la valeur de seuil lobe, pour couvrir tout un domaine angulaire d'intérêt prédéfini.

Le système radar peut comprendre une configuration opérationnellement en « écoute » dans le domaine de fréquence radiofréquences de type « bande X ».

Il est en outre proposé un procédé de détection de canaux fréquentiels, mis en œuvre dans un système radar comprenant N voies de réception, N étant un entier supérieur ou égal à 2, le procédé comprenant la réception, au niveau de chaque voie, de signaux. Le procédé comprend, pour chaque voie de réception les étapes suivantes consistant à :

- convertir, dans le domaine spectral, les signaux reçus pour former N signaux convertis définis chacun sur une bande fréquentielle instantanée donnée associée à un ensemble de canaux fréquentiels,
- déterminer des valeurs de corrélation en appliquant une corrélation de puissance entre le spectre du signal converti propagé sur la voie de réception et le spectre d'un signal de référence arbitraire choisi parmi un des signaux convertis propagés sur une des voies de réception.

Le procédé comprend en outre une évaluation des canaux fréquentiels occupés comprenant les étapes consistant à :

- déterminer les valeurs de la voie somme à partir des valeurs de corrélation des N voies de réception,

- comparer la valeur de la voie somme associée à une valeur de seuil de détection prédéfinie, et

- déterminer que le canal fréquentiel est occupé si la valeur de la voie somme associée est supérieure à la valeur de seuil de détection prédéfinie.

Les modes de réalisation de l'invention fournissent ainsi un système radar et un procédé permettant la détection et l'évaluation de canaux fréquentiels occupés selon une estimation satisfaisante de la direction d'arrivée d'un signal détecté.

Les modes de réalisation de l'invention fournissent également une solution efficace et abordable en termes de complexité matérielle, tout en limitant les coûts de fabrication et d'installation, ainsi que les coûts énergétiques de mise en œuvre. Le système proposé a avantageusement une compacité volumique et massique réduite, ainsi qu'un encombrement optimisé.

**Description des figures**

D'autres caractéristiques, détails et avantages de l'invention ressortiront à la lecture de la description faite en référence aux dessins annexés donnés à titre d'exemple.

[Fig.1] La figure 1 est un schéma représentant un système radar de détection de canaux fréquentiels occupés, selon des modes de réalisation de l'invention.

[Fig.2] La figure 2 est constituée de deux schémas (a) et (b) représentant un module de mesure d'une voie de réception d'un système radar, selon des modes de réalisation de l'invention.

[Fig.3] La figure 3 est un schéma représentant un dispositif de calibrage d'un système radar, selon des modes de réalisation de l'invention.

[Fig.4] La figure 4 est constituée de deux schémas (a) et (b) représentant respectivement un module de mesure de correction de bruit d'une voie de traitement du bruit et un module de mesure de correction d'une voie de calibration d'un dispositif de calibrage d'un système radar, selon des modes de réalisation de l'invention.

[Fig.5] La figure 5 est un schéma représentant une antenne 2D à 4 voies de réception, selon des modes de réalisation de l'invention.

[Fig.6] La figure 6 est un organigramme représentant un procédé d'évaluation de canaux fréquentiels d'un signal reçu, selon des modes de réalisation de l'invention.

[Fig.7] La figure 7 est organigramme représentant un procédé d'estimation de la direction d'arrivée d'un signal reçu, selon des modes de réalisation de l'invention.

Des références identiques sont utilisées dans les figures pour désigner des éléments identiques ou analogues. Pour des raisons de clarté, les éléments représentés ne sont pas à l'échelle.

## Description détaillée

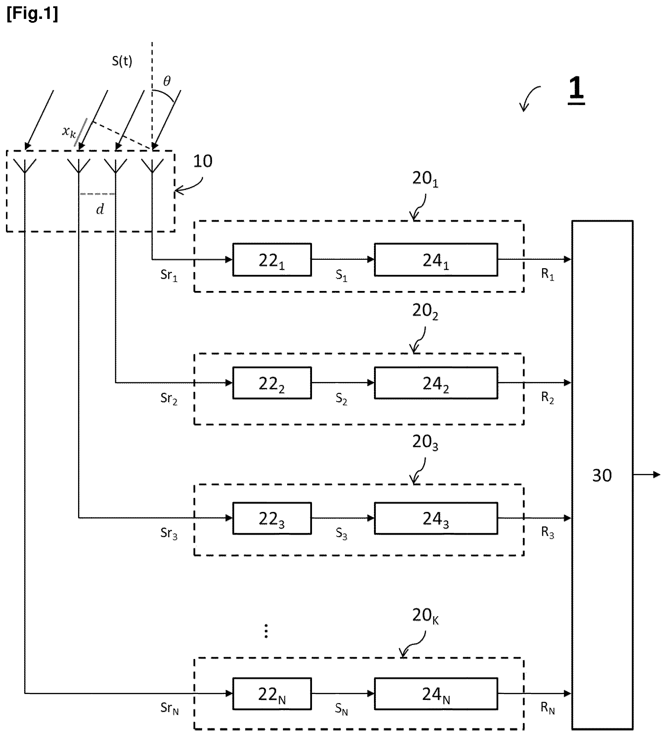

La figure 1 représente schématiquement un système radar de détection de canaux fréquentiels occupés 1 comprenant un ensemble 10 de N antennes électromagnétiques radar (ou un ensemble 10 de N récepteurs d'une antenne électromagnétique radar) associées chacune à une voie de réception $20_n$ et un module d'évaluation 30 de canaux fréquentiels occupés, selon des modes de réalisation de l'invention.

Le système radar 1 comprend ainsi un nombre N de voies de réception $20_n$, chaque voie étant apte à recevoir un ou plusieurs signaux reçus (i.e. signaux temporels reçus), notés $Sr_n$, provenant (i.e. au moyen) d'une des antennes radar de l'ensemble 10. L'indice 'n', associé aux voies de réception, est un entier compris entre 1 et N, et la valeur de N étant un entier supérieur ou égal à 2.

Le système radar 1 peut être utilisé dans divers domaines civiles ou militaires, en particulier pour des applications de détection et de localisation d'émissions électromagnétiques dans un environnement électromagnétique dense.

Avantageusement, le système radar 1 peut être un système multi-antennaire (ou multivoies) configuré en « écoute », c'est-à-dire selon une configuration opérationnelle exploitant les signaux issus des antennes (ou de l'antenne) captant l'environnement extérieur et des différentes voies de réception sans émettre de signal électromagnétique. Ainsi, tel qu'utilisé ici, une 'configuration opérationnellement en « écoute »' fait référence à une configuration dans laquelle le système radar opère en mode « écoute ». Le domaine de fréquence opérationnel d'un tel système peut comprendre une très large gamme de fréquences, et se situer dans le domaine des radiofréquences (RF) correspondant, par exemple et sans limitations, à une bande RF type « bande X » comprise typiquement entre 8 GHz et 12 GHz, à une bande RF type « bande Ku » comprise typiquement entre 12 GHz et 18 GHz, à une bande RF type « bande K » comprise typiquement entre 18 GHz et 26 GHz, ou encore à une bande RF type « bande Ka » comprise typiquement entre 26 GHz et 40 GHz.

Le système radar 1 peut en particulier utiliser un dispositif antennaire radar installé à bord d'un porteur, de petite taille comme un hélicoptère par exemple, permettant de fournir un système abordable en termes d'implémentation matérielle tout en limitant les coûts de fabrication et d'installation.

Comme représenté sur la figure 1, chaque voie de réception $20_n$ du système radar 1 comprend une unité de conversion $22_n$ et un module de mesure $24_n$, selon des modes de réalisation de l'invention.

L'unité de conversion $22_n$ est configurée pour effectuer une conversion (ou un passage), dans le domaine spectral (i.e. le domaine fréquentiel), du ou des signaux reçus $Sr_n$ pour former un signal dit 'signal converti' et noté $S_n$, à propager sur la voie de réception $20_n$, et défini sur une bande fréquentielle instantanée donnée, notée BF. Une telle bande fréquentielle instantanée est associée à un ensemble de canaux fréquentiels, notés F. Par exemple et sans limitation, une bande fréquentielle instantanée BF, définie dans une bande RF type « bande X », peut être égale à 256 MHz, et comprendre 256 canaux fréquentiels F associés, chaque canal fréquentiel F étant défini sur 1MHz. La suite de la description fera référence à la notation « $S_n(F)$ » relative à la valeur du signal converti définie sur un canal fréquentiel F spécifique.

Une telle unité de conversion $22_n$ est mise en œuvre en utilisant une analyse spectrale, définie en particulier par application d'une transformée de Fourier discrète du signal reçu $Sr_n$. Une transformation de Fourier peut être implémentée par un algorithme de calcul d'une transformée de Fourier rapide (ou FFT pour *Fast Fourier Transform* selon l'acronyme anglo-saxon correspondant).

Le module de mesure $24_n$ (encore appelé 'module de détermination' ou 'module de calcul') est configuré pour mettre en œuvre des opérations, dans le domaine spectral, pour déterminer la corrélation de puissance, notée $R_n$, entre le spectre du signal converti $S_n$ propagé sur la voie de réception $20_n$ et un signal de référence arbitraire, noté $S_{ref}$. Pour chaque canal fréquentiel F de la bande fréquentielle instantanée donnée BF, la valeur de corrélation associée peut être notée $R_n(F)$.

Le signal de référence arbitraire $S_{ref}$ est choisi parmi l'ensemble des N signaux convertis $S_n$ propagés sur les voies de réception du système radar 1. Par exemple et sans limitations, le signal de référence arbitraire $S_{ref}$ peut correspondre au signal converti $S_1$ à propager sur une première voie de réception noté $20_1$. Chacun des signaux convertis d'une autre voie de réception peut alternativement être utilisé comme signal de référence arbitraire $S_{ref}$.

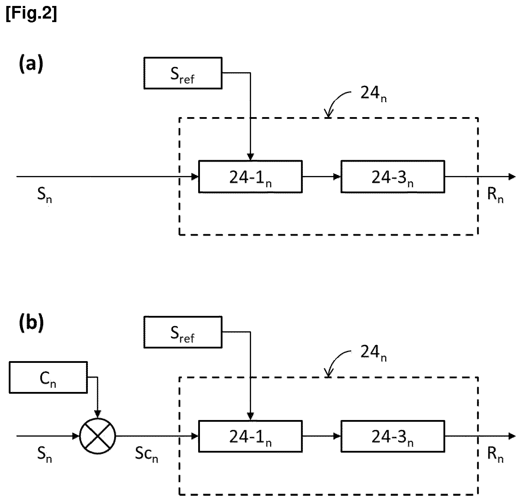

Dans certains modes de réalisation, le signal en entrée de l'unité de mesure $24_n$ peut être le signal converti $S_n$ propagé sur la voie de réception $20_n$, comme représenté sur la figure 2(a).

Dans d'autres modes de réalisation, le signal en entrée de l'unité de mesure $24_n$ peut être un signal calibré en amplitude et en phase, à propager sur la voie de réception $20_n$ et noté $Sc_n$, comme représenté sur la figure 2(b).

Le module 30 d'évaluation de canaux fréquentiels occupés du système radar 1 est configuré pour déterminer (ou reconstituer) la voie somme Σ des N voies de réception. En particulier, le module 30 d'évaluation de canaux fréquentiels occupés est configuré pour déterminer, pour chaque canal fréquentiel F de la bande fréquentielle instantanée donnée BF, la valeur de la voie somme, notée Σ(F), à partir des valeurs de corrélation $R_n(F)$ définies pour chaque canal fréquentiel F de l'ensemble des N voies de réception, telle que définie selon l'équation (01) suivante :

$$\Sigma(F) = \sum_n R_n(F) \tag{01}$$

Le module 30 est en outre configuré pour évaluer (c'est-à-dire détecter ou déterminer) si un canal fréquentiel F spécifique est occupé à partir de la comparaison de la valeur de la voie somme Σ(F) associée, à un seuil de détection $\tau_{seuil}$ prédéfini. Le canal fréquentiel F peut alors être considéré comme « occupé » (ou encore « pollué ») si la valeur de la voie somme Σ(F) est supérieure au seuil de détection $\tau_{seuil}$. Alternativement, le canal fréquentiel F spécifique peut être considéré comme « libre » si la valeur de la voie somme Σ(F) est inférieure au seuil de détection $\tau_{seuil}$. Par exemple et sans limitation, en fonction de la valeur du seuil de détection $\tau_{seuil}$ prédéfini, si la valeur de la voie somme Σ(F) est strictement supérieure (ou alternativement supérieur ou égale) au seuil de détection $\tau_{seuil}$, alors le canal fréquentiel F peut alors être considéré comme « occupé » ; et si la valeur de la voie somme Σ(F) est inférieure ou égale (ou alternativement strictement inférieur) au seuil de détection $\tau_{seuil}$, alors le canal fréquentiel F peut être considéré comme « libre ».

Avantageusement, le module 30 est configuré pour appliquer cette évaluation de l'occupation de l'ensemble des canaux fréquentiels F définis dans la bande fréquentielle instantanée donnée BF.

Il est à noter qu'un signal S(t) reçu par l'antenne du système 1 est caractérisé par une direction d'arrivée θ (ou DOA pour *Direction of Arrival* selon l'acronyme anglo-saxon correspondant, également appelée 'direction de provenance') définie par rapport à l'orientation de l'antenne, c'est à dire du plan des récepteurs de l'ensemble 10, comme schématisé sur la figure 1.

A titre d'illustration, dans le cas d'une antenne unidimensionnelle (1D) composée de récepteurs espacés d'une distance d, les récepteurs de l'ensemble 10 sont configurés pour traiter le signal temporel S(t) reçu depuis la direction d'arrivée θ. La différence de marche $x_k$ de réception du signal reçu entre un premier récepteur et un k-ième récepteur peut être définie selon l'équation (02) suivante :

$$x_k = k.d.\sin(\theta) \tag{02}$$

L'indice 'k' représente un entier compris entre 2 et N. L'écart de phase Δφ entre le premier récepteur et le k-ième récepteur considérés, et donc les voies de réception associées, peut ainsi être exprimé selon l'équation (03) suivante :

$$\Delta\phi = \frac{2\pi}{\lambda} \times x_k = k.\Delta\varphi \tag{03}$$

Dans l'équation (03), le coefficient Δφ correspond au coefficient d'écart de phase égal à l'équation (04) suivante :

$$\Delta\varphi = \frac{2\pi}{\lambda}.d.\sin(\theta) \tag{04}$$

Le signal reçu par le système radar 1, après démodulation puis transformée de Fourrier, c'est-à-dire converti dans le domaine fréquentiel, peut être représenté pour chaque canal fréquentiel selon l'expression matricielle (05) suivante, pour chaque voie de réception $20_n$ :

$$\begin{pmatrix} S_1 \\ S_2 \\ ... \\ S_N \end{pmatrix} = \begin{pmatrix} A_1.e^{i\varphi_0} \\ A_2.e^{i(\Delta\varphi + \varphi_0)} \\ ... \\ A_N.e^{i((N-1)\times\Delta\varphi + \varphi_0)} \end{pmatrix} \tag{05}$$

Dans la formule (05), les valeurs $A_n$ correspondent au niveau du signal $S(t)$ reçu multiplié par le gain d'antenne, noté $G_n$, prédéfini pour chacune des voies de réception $20_n$ du système radar 1. En utilisant le signal converti $S_1$ à propager sur la première voie de réception $20_1$ comme signal de référence arbitraire $S_{ref}$, l'ensemble R relatif aux corrélations de puissance $R_n$ des voies de réception $20_n$ peut être représenté selon la relation (06) suivante :

$$R = \begin{pmatrix} R_1 \\ R_2 \\ ... \\ R_N \end{pmatrix} = \begin{pmatrix} E[S_1 * S_1^*] \\ E[S_2 * S_1^*] \\ ... \\ E[S_N * S_1^*] \end{pmatrix} = \begin{pmatrix} A_1^2 \\ A_1.A_2.e^{i\Delta\varphi} \\ ... \\ A_1.A_N.e^{i(N-1)\times\Delta\varphi} \end{pmatrix} \qquad (06)$$

Ainsi, pour chacune des voies de réception $20_n$, la corrélation de puissance $R_n$ peut être définie, par rapport au signal de référence arbitraire choisie (c'est-à-dire par exemple à la voie unique de référence $20_1$), à une constante multiplicative près, selon l'amplitude $A_n$ et le coefficient d'écart de phase $\Delta\varphi$ du signal reçu, tel que défini selon l'expression (07) suivante :

$$R_n = A_1.A_n.e^{i(n-1)\times\Delta\varphi} \qquad (07)$$

Avantageusement, comme représenté sur les figures 2(a) et 2(b), le module de mesure $24_n$ d'une voie de réception $20_n$ peut comprendre une première unité $24\text{-}1_n$ configurée pour appliquer une opération consistant à effectuer un produit de corrélation entre le signal converti $S_n$ et le signal de référence arbitraire $S_{ref}$. Une telle opération, encore appelé 'opération de produit', peut correspondre à une densité spectrale de puissance du signal propagé sur la voie de réception $20_n$ par rapport à un signal de référence arbitraire $S_{ref}$, et peut être représentée par l'expression « $S_n * S_1^*$ » présentée dans l'expression (06) précédente. Le module de mesure $24_n$ d'une voie de réception $20_n$ peut en outre comprendre une deuxième unité $24\text{-}3_n$ configurée pour appliquer une opération de sommation dudit produit de corrélation issu de la première unité $24\text{-}1_n$ pour générer la corrélation de puissance $R_n$. Une telle opération de sommation peut correspondre à une opération de post-intégration (ou d'intégration) sur plusieurs trames successives.

Dans des modes de réalisation, pour chaque voie de réception $20_n$, le signal calibré en amplitude et en phase $Sc_n$ qui peut être utilisé en entrée de l'unité de mesure $24_n$, comme représenté sur la figure 2(b), peut être généré à partir de la correction du signal converti $S_n$ propagé sur la voie de réception $20_n$ par rapport à un coefficient de correction, noté $C_n$ (appelé également signal de correction). En particulier, le système radar 1 peut comprendre un dispositif de calibrage de système de formation de faisceau 1C configuré pour générer pour chaque voie de calibration $20_n$ un tel signal de correction $C_n$.

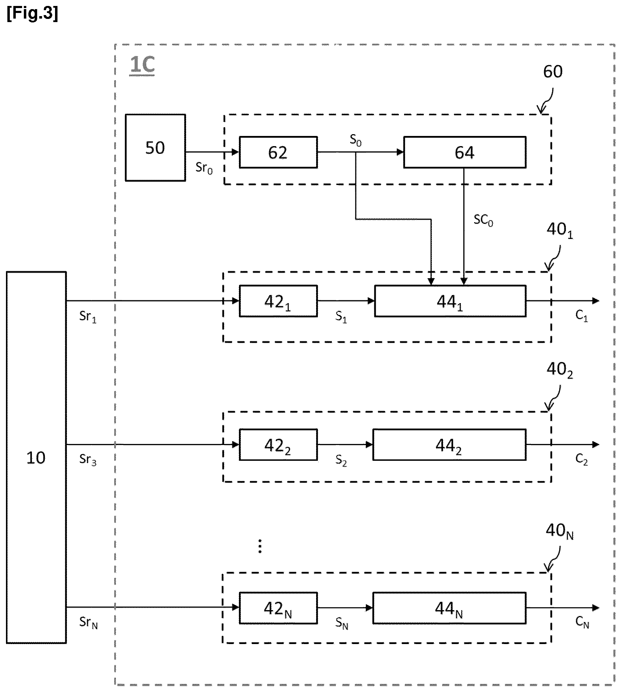

Tel que représenté sur la figure 3, le dispositif de calibrage 1C peut comprendre un nombre N de voies de calibration $40_n$, chaque voie étant apte à recevoir un ou plusieurs signaux reçus $Sr_n$ provenant d'une des antennes de l'ensemble 10 (ou d'un des récepteurs d'antenne radar), une unité de génération d'un signal de bruit 50 et une voie de traitement du bruit 60.

Un tel dispositif de calibrage 1C permet de calibrer le système radar 1, sur l'ensemble des canaux fréquentiels d'une bande fréquentielle instantanée donnée BF et/ou sur un ensemble de bandes fréquentielles instantanées associées à une bande RF spécifique, en égalisant en amplitude et en phase la ou les différents signaux convertis $S_n$ à propager sur les voies de réception.

L'unité 50 peut ainsi être configurée pour générer un signal de bruit, noté $Sr_0$, large bande, c'est-à-dire couvrant par exemple tout l'ensemble de la bande fréquentielle instantanée BF des antennes radar de réception de l'ensemble 10.

Comme représenté sur la figure 3, chaque voie de calibration $40_n$ du dispositif de calibrage 1C peut comprendre une unité de conversion de correction $42_n$ et un module de mesure de correction $44_n$, selon des modes de réalisation de l'invention.

De façon analogue, comme représenté sur la figure 3, la voie de traitement du bruit 60 du dispositif de calibrage 1C peut comprendre une unité de de conversion de correction de bruit 62 et un module de mesure de correction de bruit 64, selon des modes de réalisation de l'invention.

L'unité de conversion de correction $42_n$ de chaque voie de calibration $40_n$ peut correspondre (c'est-à-dire être assimilable et/ou être équivalente) à une unité de conversion $22_n$ de la voie de réception $20_n$ du système radar 1. L'unité $42_n$ peut donc être configurée pour appliquer une conversion (ou un passage), dans le domaine spectral, des signaux reçus $Sr_n$ pour former le signal converti $S_n$ à propager sur la voie de réception $40_n$ et défini sur une bande fréquentielle instantanée prédéterminée BF, et associée à l'ensemble de canaux fréquentiels F.

Avantageusement, l'unité de conversion de correction de bruit 62 de la voie de traitement du bruit 60 peut également correspondre à une unité de conversion $22_n$, c'est-à-dire être configurée pour appliquer une conversion (ou un passage), dans le domaine spectral, du signal de bruit $Sr_0$ pour former le signal converti de bruit $S_0$ à propager et défini sur une bande fréquentielle instantanée prédéterminée BF, et associée à l'ensemble de canaux fréquentiels F. La suite de la description fera référence à la notation « $S_0(F)$ » relative au signal converti de bruit défini sur un canal fréquentiel F spécifique.

Le module de mesure de correction de bruit 64 (encore appelé 'module de détermination de correction de bruit' ou 'module de calcul de correction de bruit') de la voie de traitement du bruit 60 peut être configuré pour mettre en œuvre des opérations dans le domaine spectral pour déterminer le coefficient de correction du bruit, noté $SC_0$. En particulier, ce coefficient de correction du bruit $SC_0$ correspond à l'inter-corrélation de puissance du signal converti de bruit $S_0$.

Le module de mesure de correction $44_n$ (encore appelé 'module de détermination de correction' ou 'module de calcul de correction') de chaque voie de calibration $40_n$ du dispositif de calibrage 1C peut être configuré pour mettre en œuvre des opérations dans le domaine spectral pour déterminer le coefficient de correction $C_n$. En particulier, ce coefficient de correction $C_n$ correspond à la corrélation de puissance entre le spectre du signal converti $S_n$ à propager sur la voie de calibration $40_n$ et le signal converti de bruit $S_0$. Il est à noter que les valeurs de coefficients complexes de correction, notées $C_n(F)$, peuvent correspondre aux estimations de correction de l'écart en amplitude et en phase de chacune des voies de réception $20_n$ du système radar 1 pour chaque canal fréquentiel F du domaine spectral. De tels coefficients de correction $C_n$ permettent d'équilibrer en amplitude et en phase chacune des voies de réception $20_n$ sur toute la bande fréquentielle instantanée prédéterminée BF.

Pour chaque voie de réception $20_n$, les signaux calibrés en amplitude et en phase $Sc_n$ définis à partir des coefficients de correction $C_n$ appliqués aux signaux convertis $S_n$, peuvent alors être utilisés dans le traitement de signal des antennes de réception de l'ensemble 10.

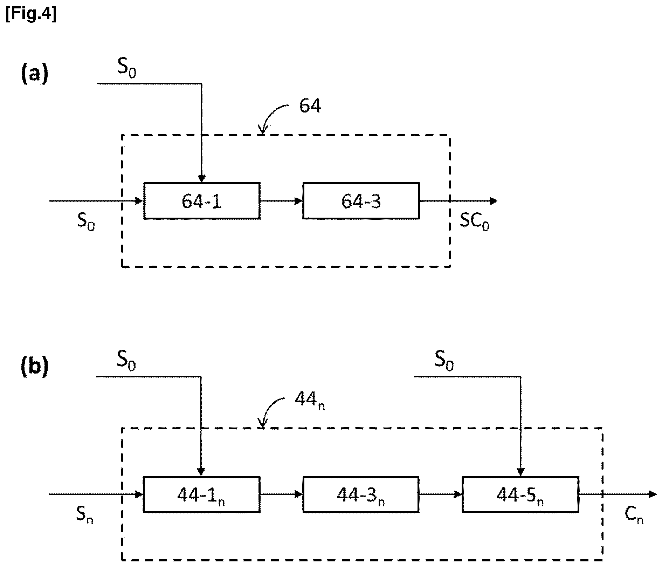

Dans des modes de réalisation, comme représenté sur la figure 4(a), le module de mesure de correction de bruit 64 de la voie de traitement du bruit 60 peut comprendre une première unité de correction de bruit 64-1 et une deuxième unité de correction de bruit 64-3. Par exemple et sans limitations, la première unité de correction de bruit 64 peut être configurée pour appliquer une opération consistant à effectuer un produit d'inter-corrélation du signal converti de bruit $S_0$ (issu de l'unité de conversion de correction de bruit 62 de la voie de traitement du bruit 60), correspondant par exemple à l'opération de produit défini par l'expression « $S_0 * S_0^*$ »). La deuxième unité de correction de bruit 64-3 peut être configurée pour appliquer une opération de post-intégration dudit produit d'inter-corrélation issu de la première unité de correction de bruit 64-1, pour générer le coefficient de correction du bruit $SC_0$.

Dans des modes de réalisation, comme représenté sur la figure 4(a), le module de mesure de correction $44_n$ d'une voie de calibration $40_n$ peut comprendre une première unité de correction $44\text{-}1_n$ et une deuxième unité de correction $44\text{-}3_n$. Par exemple et sans limitations, la première unité de correction $44\text{-}1_n$ peut être configurée pour appliquer une opération consistant à effectuer un produit de corrélation entre le signal converti $S_n$ (issu de l'unité de conversion $42_n$) et le signal converti de bruit $S_0$ (issu de l'unité de conversion de correction de bruit 62 de la voie de traitement du bruit 60). La deuxième unité de correction $44\text{-}3_n$ peut être configurée pour appliquer une opération de post-intégration dudit produit de corrélation issu de la première de correction $44\text{-}1_n$.

Le module de mesure de correction $44_n$ peut en outre comprendre une troisième unité de correction $44\text{-}5_n$ configurée pour appliquer une opération consistant à effectuer une division entre le signal de post-intégration issu de la deuxième unité de correction $44\text{-}3_n$ et le coefficient de correction du bruit $SC_0$ (issu du module de mesure de correction de bruit 64 de la voie de traitement du bruit 60), pour générer le coefficient de correction $C_n$ de la voie de réception $20_n$.

Par ailleurs, dans le cas où la valeur de la voie somme $\Sigma(F)$, définie pour un canal fréquentiel F, est supérieure au seuil de détection $\tau_{seuil}$, c'est-à-dire que le canal fréquentiel F est occupé selon un signal S(t) reçu, le module 30 du système radar 1 peut être en outre configuré pour évaluer la direction d'arrivée $\theta$ du signal S(t) reçu par l'antenne du système 1, par rapport aux récepteurs d'antenne de l'ensemble 10.

Avantageusement, le système radar 1 peut être configuré pour appliquer et modifier une direction opérationnelle de pointage des récepteurs de l'ensemble 10. En particulier, pour une antenne bidimensionnelle (2D) par exemple, le système radar 1 peut être initialement configuré pour appliquer une direction d'antenne de pointage en élévation $\theta_{E0}$ et une direction d'antenne de pointage en circulaire $\theta_{C0}$, préalablement à l'acquisition du signal S(t) par l'antenne.

Selon des variantes de l'invention, pour évaluer la direction d'arrivée $\theta$ du signal S(t) reçu, le module 30 du système radar 1 peut être adapté pour déterminer si, pour le canal fréquentiel F alors occupé, la direction opérationnelle de pointage de l'antenne 10 coïncide (notamment coïncide approximativement) avec cette direction d'arrivée, puis pour estimer (ou déterminer) une direction affinée d'arrivée du signal S(t) reçu.

Pour cela, le module 30 d'évaluation peut être configuré pour déterminer (ou reconstituer) la voie écart de l'ensemble des N voies de réception à partir des corrélations de puissance $R_n$.

Pour une antenne 1D, le module 30 d'évaluation peut par exemple être configuré pour déterminer, pour chaque canal fréquentiel F de la bande fréquentielle instantanée donnée BF, une valeur de la voie écart, notée $\Delta(F)$. Pour une

antenne 2D, le module 30 d'évaluation peut être configuré pour déterminer, pour chaque canal fréquentiel F de la bande fréquentielle instantanée donnée BF, une valeur de la voie écart en circulaire, notée $\Delta C(F)$, ainsi qu'une valeur de la voie écart en élévation, notée $\Delta E(F)$. De telles valeurs de la voie écart pour une antenne 2D peuvent être définies selon les équations (08) et (09) suivantes :

$$\Delta C(F) = \sum_n w_c(n).R_n(F) \tag{08}$$

$$\Delta E(F) = \sum_n w_E(n).R_n(F) \tag{09}$$

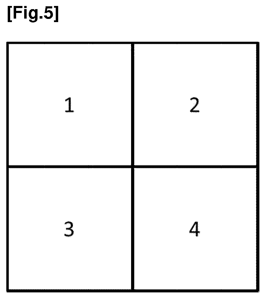

Dans les équations (08) et (09), les éléments $w_c(n)$ et $w_E(n)$ correspondent aux coefficients d'antenne respectivement en circulaire et en élévation, relatifs à la voie de réception $20_n$ et au $n^{ième}$ récepteur d'antenne associé au système radar 1. Par exemple et sans limitation, la figure 5 représente une illustration schématique d'une antenne 2D à 4 voies de réception. Dans ce cas, de tels coefficients d'antenne peuvent être exprimés selon les expressions (10) et (11) suivantes :

$$w_c = \{+i, -i, +i, -i\} \tag{10}$$

$$w_E = \{+i, +i, -i, -i\} \tag{11}$$

Le module 30 d'évaluation peut également être configuré pour déterminer le ratio de la voie écart sur l'ensemble des N voies de réception, à partir de la voie écart et de la voie somme $\Sigma(F)$.

En particulier, le module 30 d'évaluation peut également être configuré pour déterminer, pour chaque canal fréquentiel F de la bande fréquentielle instantanée donnée BF, une ou plusieurs valeurs de ratio à partir de la valeur ou des valeurs de la voie écart et de la valeur de la voie somme $\Sigma(F)$ définies chacune sur l'ensemble des N voies de réception.

Pour faciliter la compréhension de l'invention et à titre de simplification, la suite de la description sera faite principalement en référence une antenne 2D. L'homme du métier comprendra aisément que l'invention peut s'appliquer à tout type d'antenne, notamment à une antenne 1D. Ainsi, dans le cas particulier d'une antenne 2D, le module d'évaluation 30 peut être configuré pour déterminer, pour chaque canal fréquentiel F de la bande fréquentielle instantanée donnée BF, une valeur du ratio de la voie écart en circulaire $ratio_C(F)$, ainsi qu'une valeur du ratio de la voie écart en élévation $ratio_E(F)$, telles que définies selon les équations (12) et (13) suivantes :

$$ratio_C(F) = \frac{\Delta C(F)}{\Sigma(F)} \tag{12}$$

$$ratio_E(F) = \frac{\Delta E(F)}{\Sigma(F)} \tag{13}$$

Le module d'évaluation 30 peut alors être adapté pour déterminer si la direction de pointage en élévation et en circulaire $(\theta_{E0}, \theta_{C0})$ de l'antenne 10, pour chaque canal fréquentiel F de la bande fréquentielle instantanée donnée BF, correspond à la direction d'arrivée du signal S(t) reçu, à partir de la comparaison de la ou des valeurs de la voie écart à une valeur de seuil prédéfinie, dite 'seuil lobe' et notée $\varepsilon_{lobe}$, et en particulier, à partir de la comparaison de la valeur du ratio de la voie écart en circulaire $ratio_C(F)$ et de la valeur du ratio de la voie écart en élévation $ratio_E(F)$ au seuil lobe prédéfinie $\varepsilon_{lobe}$.

Avantageusement, la direction de pointage en élévation et en circulaire $(\theta_{E0}, \theta_{C0})$ de l'antenne 10 correspond à la direction d'arrivée du signal S(t) reçu, si la valeur absolue du ratio de la voie écart en circulaire $|ratio_C(F)|$, ainsi que la valeur absolue du ratio de la voie écart en élévation $|ratio_E(F)|$ sont chacune inférieures au seuil lobe prédéfinie $\varepsilon_{lobe}$. Alternativement, la direction de pointage en élévation et en circulaire $(\theta_{E0}, \theta_{C0})$ de l'antenne 10 ne correspond pas à la direction d'arrivée du signal S(t) reçu, si la valeur absolue du ratio de la voie écart en circulaire $|ratio_C(F)|$ et/ou la valeur absolue du ratio de la voie écart en élévation $|ratio_E(F)|$ est supérieure au seuil lobe prédéfinie $\varepsilon_{lobe}$. Par exemple, en fonction de la valeur du seuil lobe $\varepsilon_{lobe}$ prédéfini, si la valeur absolue du ratio de la voie écart en circulaire $|ratio_C(F)|$ et/ou la valeur absolue du ratio de la voie écart en élévation $|ratio_E(F)|$ sont chacune strictement inférieures (ou alternativement inférieures ou égales) au seuil lobe $\varepsilon_{lobe}$, alors la direction de pointage en élévation et en circulaire peut correspondre à la direction d'arrivée du signal S(t) reçu ; et si la valeur absolue du ratio de la voie écart en circulaire $|ratio_C(F)|$ et/ou la valeur absolue du ratio de la voie écart en élévation |ratio$_E$(F)| est supérieure ou égale (ou alternativement strictement supérieure) au seuil lobe $\varepsilon_{lobe}$, alors la direction de pointage en élévation et en circulaire peut correspondre à la direction d'arrivée du signal S(t) reçu.

Dans le cas où les valeurs absolues du ratio de la voie écart en circulaire |ratio$_C$(F)| et en élévation |ratio$_E$(F)| sont inférieures au seuil lobe $\varepsilon_{lobe}$, c'est-à-dire que la direction de pointage en élévation et en circulaire ($\theta_{E0}$, $\theta_{C0}$) de l'antenne 10 correspond à la direction d'arrivée du signal S(t) reçu, le module 30 peut être adapté pour évaluer (c'est-à-dire estimer ou déterminer) une direction affinée en élévation et en circulaire ($\theta_{Eestim}$, $\theta_{Cestim}$) d'arrivée du signal S(t) reçu. Une telle direction affinée peut être estimée à partir de la valeur du ratio de la voie écart en circulaire ratio$_C$(F), de la valeur du ratio de la voie écart en élévation ratio$_E$(F), ainsi que de la direction de pointage en élévation et en circulaire ($\theta_{E0}$, $\theta_{C0}$) de l'antenne 10.

Ainsi, dans des modes de réalisation, le module d'évaluation 30 peut être adapté pour déterminer la valeur de la direction affinée en élévation $\theta_{Eestim}$ selon l'équation (14) suivante :

$$\theta_{E_{estim}} = asin\left[sin(\theta_{E0}) + \left(\sum_{i=0}^{J} a_i \times ratio_E(F)^i\right)\right] \qquad (14)$$

En outre, le module d'évaluation 30 peut être adapté pour déterminer la valeur de la direction affinée en circulaire $\theta_{Cestim}$ en fonction de la valeur de la direction affinée en élévation $\theta_{Eestim}$ selon l'équation (15) suivante :

$$\theta_{C_{estim}} = asin\left[\frac{1}{cos(\theta_{E_{estim}})} \times \left[\left(cos(\theta_{E0}).\,sin(\theta_{C0})\right) + \left(\sum_{i=0}^{J} a_i \times ratio_C(F)^i\right)\right]\right]$$

$$(15)$$

Dans les équations mathématiques (14) et (15) précédentes, les éléments $a_i$ sont des coefficients polynomiaux dépendant de caractéristiques prédéfinies de l'antenne 10, et l'entier J correspond à un ordre du polynôme choisi.

Il est à noter que la bande de fréquence associée au canal fréquentiel F peut correspondre avantageusement à la bande de fréquence instantanée centrée sur la fréquence porteuse prédéfinie de l'antenne radar par exemple, caractérisé par une direction de pointage particulière. Avantageusement, le système radar 1 peut être configuré pour appliquer l'évaluation du canal fréquentiel F et/ou à l'estimation de la direction d'arrivée du signal S(t) reçu pour une pluralité de bandes de fréquence instantanées BF, notamment pour plusieurs fréquences porteuses du radar dans sa bande d'agilité. Ceci permet ainsi au système radar 1 d'effectuer un balayage fréquentiel de détection de signal par l'antenne pour couvrir tout un domaine fréquentiel d'intérêt prédéfini (par exemple tout un domaine fréquentiel associé à la bande RF de type « bande X »).

Lors de l'estimation de la direction d'arrivée du signal S(t) reçu par l'antenne du système 1, dans le cas où la direction de pointage en élévation et en circulaire ($\theta_{E0}$, $\theta_{C0}$) de l'antenne 10 ne correspond pas à cette direction d'arrivée par exemple, le système radar 1 peut être configuré pour appliquer une nouvelle direction d'antenne de pointage en élévation et en circulaire avant acquisition de nouveau d'un signal S(t) par l'antenne puis d'effectuer de nouveau une estimation de la direction d'arrivée du signal. Ceci permet ainsi au système radar 1 d'effectuer un balayage spatial de détection du signal par l'antenne pour couvrir tout un domaine angulaire d'intérêt (de direction de pointage d'antenne) prédéfini.

Dans des modes de réalisation, le module 30 d'évaluation peut être configuré pour estimer grossièrement la direction d'arrivée $\theta$ du signal S(t) reçu par une antenne 1D par exemple, à partir de la mesure du coefficient d'écart de phase $\Delta\varphi$ du signal reçu, des valeurs de longueur d'onde $\lambda$ du signal S(t) et de l'espacement d des récepteurs connus. Selon l'équation (04) définissant ce coefficient, la direction d'arrivée $\theta$ peut être déduite de l'expression (16) suivante :

$$\sin(\theta) = \Delta\varphi.\frac{\lambda}{2\pi}.d \qquad (16)$$

Il est à noter que la mesure du coefficient d'écart de phase $\Delta\varphi$ étant définie entre $-\pi$ et $\pi$, elle peut induire une ambiguïté sur l'estimation de la direction d'arrivée $\theta$ du signal S(t) reçu. Dans ce cas, une telle estimation grossière peut être effectuée pour une antenne 10 comprenant des récepteurs très proches (c'est-à-dire comprenant un espacement maximal d'une demi-longueur d'onde du signal) ou une numérisation des voies à l'élément rayonnant dans le cas d'une antenne réseau.

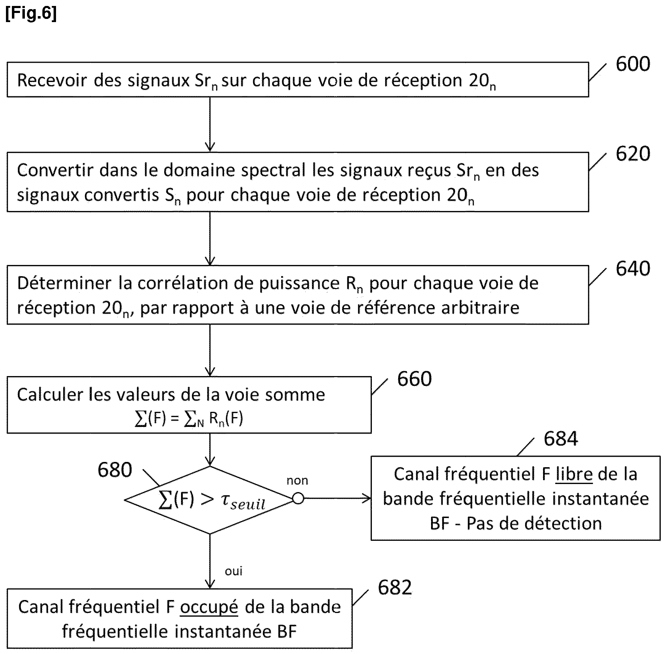

La figure 6 représente le procédé d'évaluation d'un canal fréquentiel du signal S(t) reçu, selon des modes de réalisation de l'invention.

A l'étape 600, chaque voie de réception $20_n$ reçoit des signaux $Sr_n$ provenant d'une des antennes de l'ensemble 10 (ou d'un des récepteurs d'antenne radar) et issus d'un signal S(t).

A l'étape 620, sur chaque voie de réception $20_n$, les signaux reçus $Sr_n$ sont convertis dans le domaine spectral, pour former le signal fréquentiel converti $S_n$ à propager sur la voie $20_n$.

A l'étape 640, pour chaque voie de réception $20_n$, pour chaque canal fréquentiel F d'une bande fréquentielle instantanée donnée BF, les valeurs de corrélation $R_n(F)$ sont déterminées en appliquant une corrélation de puissance entre le spectre du signal propagé $S_n$ sur la voie $20_n$ et un signal de référence arbitraire $S_{ref}$.

A l'étape 660, pour chaque canal fréquentiel F de la bande fréquentielle instantanée donnée BF, les valeurs de la voie somme $\Sigma(F)$ sont déterminées à partir des valeurs de corrélation $R_n(F)$ définis pour l'ensemble des N voies de réception telle que définie selon l'équation (01) précédente.

A l'étape 680, pour chaque canal fréquentiel F de la bande fréquentielle instantanée donnée BF, les valeurs de la voie somme $\Sigma(F)$ sont comparées à une valeur de seuil de détection $\tau_{seuil}$ prédéfinie.

A l'étape 682, si une valeur de la voie somme $\Sigma(F)$ est supérieure au seuil de détection $\tau_{seuil}$, le canal fréquentiel F associé est alors considéré « occupé ». Alternativement, à l'étape 684, si une valeur de la voie somme $\Sigma(F)$ est inférieure au seuil de détection $\tau_{seuil}$, le canal fréquentiel F associé est alors considéré « libre ».

L'étape 620 et/ou 640 peut être par la suite répétée pour déterminer de nouvelles valeurs de corrélation $R_n(F)$ selon une autre bande fréquentielle instantanée donnée BF pour effectuer un balayage fréquentiel, sur une bande RF prédéterminée par exemple.

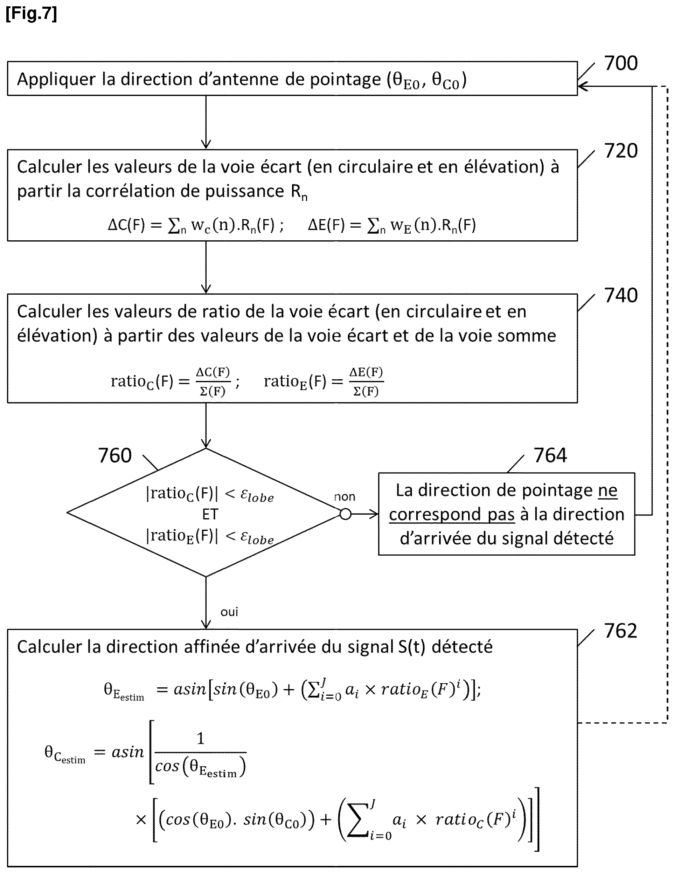

La figure 7 représente le procédé d'estimation de la direction d'arrivée du signal S(t) reçu, selon des modes de réalisation de l'invention.

Le procédé peut comprendre une étape initiale 700 consistant à appliquer la direction d'antenne de pointage (en élévation $\theta_{E0}$ et en circulaire $\theta_{C0}$).

A l'étape 720, pour chaque canal fréquentiel F de la bande fréquentielle instantanée donnée BF, les valeurs de la voie écart (en circulaire $\Delta C(F)$ et en élévation $\Delta E(F)$) peuvent être déterminées à partir des valeurs de corrélation $R_n(F)$ de l'ensemble des N voies de réception telles que définies par exemple selon les équations (08) et (09) précédentes.

A l'étape 740, pour chaque canal fréquentiel F de la bande fréquentielle instantanée donnée BF, les valeurs du ratio de la voie écart (en circulaire $ratio_C(F)$ et en élévation $ratio_E(F)$) peuvent être déterminées à partir des valeurs de la voie somme $\Sigma(F)$ et des valeurs de la voie écart (en circulaire $\Delta C(F)$ et en élévation $\Delta E(F)$ respectivement) telles que définies par exemple selon les équations (12) et (13) précédentes.

A l'étape 760, pour chaque canal fréquentiel F de la bande fréquentielle instantanée donnée BF, les valeurs du ratio de la voie écart (en circulaire $ratio_C(F)$ et en élévation $ratio_E(F)$) peuvent être comparées à une valeur de seuil lobe $\varepsilon_{lobe}$ prédéfinie.

A l'étape 762, si les valeurs absolues du ratio de la voie écart (en circulaire $ratio_C(F)$ et en élévation $ratio_E(F)$) sont inférieures au seuil lobe $\varepsilon_{lobe}$, la direction de pointage (en élévation $\theta_{E0}$ et en circulaire $\theta_{C0}$) de l'antenne peut correspondre à la direction d'arrivée du signal S(t) reçu, et les valeurs de la direction affinée (en élévation $\theta_{Eestim}$ et en circulaire $\theta_{Cestim}$ respectivement) peuvent être déterminées à partir des valeurs absolues du ratio de la voie écart et de la direction de pointage telles que définies par exemple selon les équations (14) et (15) précédentes. Alternativement, à l'étape 764, si au moins une des valeurs absolues du ratio de la voie écart (en circulaire $ratio_C(F)$ et en élévation $ratio_E(F)$) est supérieure au seuil lobe $\varepsilon_{lobe}$, la direction de pointage de l'antenne peut ne pas correspondre à la direction d'arrivée du signal S(t) reçu. L'étape initiale 700 peut être par la suite répétée pour appliquer une nouvelle direction d'antenne de pointage.

L'homme du métier comprendra aisément que certaines étapes des procédés relatives aux figures 6 et 7 peuvent être réalisées de manière simultanée, séquentielle, indépendante ou non, et/ou selon un ordre différent, par exemple selon un ordre défini par le système radar 1 ou le module d'évaluation 30.

Le système et les procédés décrits précédemment selon les modes de réalisation de l'invention ou des sous éléments de ce système peuvent être mis en œuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, les procédés des figures 6 et 7 peuvent par exemple être implémentés dans un système informatique.

L'invention n'est pas limitée aux modes de réalisation décrits ci-avant à titre d'exemple non limitatif. Elle englobe toutes les variantes de réalisation qui pourront être envisagées par l'homme du métier. En particulier, l'homme du métier comprendra que l'invention n'est pas limitée aux différentes unités, ou aux différentes configurations des voies de réception décrites à titre d'exemple non limitatif. En particulier, certains modes de réalisation de l'invention peuvent être combinés.

**Revendications**

1. Système radar (1) de détection de canaux fréquentiels occupés, le système comprenant N voies de réception ($20_n$) et un ensemble (10) d'antennes radar associées à chaque voie, N étant un entier supérieur ou égal à 2, chaque voie étant apte à recevoir respectivement des signaux ($Sr_n$) au moyen de l'antenne radar associée, le système radar (1) comprenant, pour chaque voie de réception ($20_n$), une unité de conversion ($22_n$) dans le domaine spectral desdits signaux reçus ($Sr_n$) pour former un signal converti ($S_n$) défini sur une bande fréquentielle instantanée donnée associée à un ensemble de canaux fréquentiels (F), et un module de détermination ($24_n$) de valeurs de corrélation ($R_n$(F)) **caractérisé en ce qu'**il est adapté pour appliquer une corrélation de puissance entre le spectre du signal converti ($S_n$) propagé sur ladite voie de réception ($20_n$) et le spectre d'un signal de référence arbitraire ($S_{ref}$) choisi parmi un des signaux convertis propagés sur une desdites voies de réception, le système radar (1) comprenant en outre un module (30) d'évaluation de canaux fréquentiels occupés adapté pour déterminer les valeurs de la voie somme ($\Sigma$(F)) à partir des valeurs de corrélation ($R_n$(F)) desdites N voies de réception, le canal fréquentiel (F) étant occupé si la valeur de la voie somme ($\Sigma$(F)) associée est supérieure à une valeur de seuil de détection ($\tau_{seuil}$) prédéfinie.

2. Système radar (1) selon la revendication 1, dans lequel ledit module de détermination ($24_n$) est configuré pour déterminer une densité spectrale de puissance du signal propagé sur ladite voie de réception (20n) par rapport audit signal de référence arbitraire ($S_{ref}$).

3. Système radar (1) selon l'une des revendications précédentes, dans lequel ledit module de détermination ($24_n$) est configuré pour appliquer une intégration sur plusieurs trames successives du signal propagé sur ladite voie de réception ($20_n$).

4. Système radar (1) selon l'une des revendications précédentes, dans lequel le système radar (1) comprend en outre un dispositif de calibrage (1C) comprenant N voies de calibrage ($40_n$), et dans lequel, pour chaque voie de calibrage ($40_n$), le dispositif de calibrage (1C) est configuré pour déterminer des valeurs de coefficient de correction ($C_n$(F)) dudit signal converti ($S_n$) pour équilibrer en amplitude et en phase chacune desdites voies de réception ($20_n$) du système radar (1).

5. Système radar (1) selon l'une des revendications précédentes, dans lequel ledit système radar (1) est configuré pour appliquer un balayage fréquentiel en répétant l'évaluation de la détection de canaux fréquentiels occupés par rapport à ladite valeur de seuil de détection ($\tau_{seuil}$), pour couvrir tout un domaine fréquentiel d'intérêt prédéfini.

6. Système radar (1) selon l'une des revendications précédentes, dans lequel le système radar (1) est configuré pour appliquer une direction d'antenne de pointage ($\theta_{E0}$, $\theta_{C0}$), et dans lequel ledit module d'évaluation de canaux fréquentiels occupés (30) est en outre adapté pour déterminer des valeurs de la voie écart ($\Delta$C(F), $\Delta$E(F)) à partir des valeurs de corrélation ($R_n$(F)) desdites N voies de réception, puis des valeurs du ratio de la voie écart ($ratio_C$(F), $ratio_E$(F)) à partir desdites valeurs de la voie somme ($\Sigma$(F)) et desdites valeurs de la voie écart ($\Delta$C(F), $\Delta$E(F)), ladite direction d'antenne de pointage ($\theta_{E0}$, $\theta_{C0}$) correspondant à la direction d'arrivée des signaux reçus ($Sr_n$) par rapport à l'orientation desdites antennes du système radar (1) si lesdites valeurs du ratio de la voie écart ($ratio_C$(F), $ratio_E$(F)) sont inférieures à une valeur de seuil lobe ($\varepsilon_{lobe}$) prédéfini.

7. Système radar (1) selon la revendication 6, dans lequel ledit module d'évaluation de canaux fréquentiels occupés (30) est en outre adapté pour déterminer au moins une direction affinée ($\theta_{Eestim}$, $\theta_{Cestim}$) d'arrivée des signaux reçus par rapport à l'orientation desdites antennes du système radar (1) à partir desdites valeurs du ratio de la voie écart ($ratio_C$(F), $ratio_E$(F)) et de ladite direction d'antenne de pointage ($\theta_{E0}$, $\theta_{C0}$).

8. Système radar (1) selon l'une des revendications 6 ou 7, dans lequel ledit système radar (1) est configuré pour appliquer un balayage spatial en répétant l'évaluation de la direction d'arrivée des signaux reçus par rapport à ladite valeur de seuil lobe ($\varepsilon_{lobe}$), pour couvrir tout un domaine angulaire d'intérêt prédéfini.

9. Système radar (1) selon l'une des revendications précédentes, dans lequel le système radar (1) comprend une configuration opérationnellement en « écoute » dans le domaine de fréquence radiofréquences de type « bande X ».

10. Procédé de détection de canaux fréquentiels occupés, mis en œuvre dans un système radar (1) comprenant N voies de réception ($20_n$), N étant un entier supérieur ou égal à 2, le procédé comprenant la réception, au niveau de chaque voie, de signaux ($Sr_n$), **caractérisé en ce que** ledit procédé comprend, pour chaque voie de réception ($20_n$) les étapes suivantes consistant à :

- convertir (620), dans le domaine spectral, les signaux reçus ($Sr_n$) pour former N signaux convertis ($S_n$) définis chacun sur une bande fréquentielle instantanée donnée associée à un ensemble de canaux fréquentiels (F),
- déterminer (640) des valeurs de corrélation ($R_n(F)$) en appliquant une corrélation de puissance entre le spectre du signal converti ($S_n$) propagé sur ladite voie de réception ($20_n$) et le spectre d'un signal de référence arbitraire ($S_{ref}$) choisi parmi un des signaux convertis propagés sur une desdites voies de réception,

le procédé comprenant en outre une évaluation des canaux fréquentiels occupés comprenant les étapes consistant à :

- déterminer (660) les valeurs de la voie somme ($\Sigma(F)$) à partir des valeurs de corrélation ($R_n(F)$) desdites N voies de réception,
- comparer (680) la valeur de la voie somme ($\Sigma(F)$) associée à une valeur de seuil de détection ($\tau_{seuil}$) prédéfinie, et
- déterminer que le canal fréquentiel (F) est occupé (682) si la valeur de la voie somme ($\Sigma(F)$) associée est supérieure à ladite valeur de seuil de détection ($\tau_{seuil}$) prédéfinie.

**Patentansprüche**

1. Radarsystem (1) zum Erkennen besetzter Frequenzkanäle, wobei das System N Empfangswege ($20_n$) und eine Anordnung (10) von Radarantennen umfasst, die jedem Weg zugeordnet sind, wobei N eine ganze Zahl größer oder gleich 2 ist, wobei jeder Weg imstande ist, jeweils Signale ($Sr_n$) anhand der zugeordneten Radarantenne zu empfangen, wobei das Radarsystem (1) für jeden Empfangsweg ($20_n$) eine Umwandlungseinheit ($22_n$) in der Spektral-Domäne der empfangenen Signale ($Sr_n$) umfasst, um ein umgewandeltes Signal ($S_n$) zu bilden, das auf einem gegebenen momentanen Frequenzband definiert ist, das einer Anordnung von Frequenzkanälen (F) zugeordnet ist, und ein Bestimmungsmodul ($24_n$) für Korrelationswerte ($R_n(F)$), **dadurch gekennzeichnet, dass** es angepasst ist, um eine Leistungskorrelation zwischen dem Spektrum des umgewandelten Signals ($S_n$), das sich auf dem Empfangsweg ($20_n$) ausbreitet und dem Spektrum eines willkürlichen Referenzsignals ($S_{Ref}$) anzuwenden, das aus einem der sich auf einem der Empfangswege ausbreitenden umgewandelten Signale ausgewählt wird, wobei das Radarsystem (1) weiter ein Modul (30) zum Bewerten besetzter Frequenzkanäle umfasst, das angepasst ist, um die Werte des Summenweges ($\Sigma(F)$) aus den Korrelationswerten ($R_n(F)$) der N Empfangswege zu bestimmen, wobei der Frequenzkanal (F) besetzt ist, wenn der Wert des zugeordneten Summenweges ($\Sigma(F)$) größer als ein vor-definierter Erkennungsschwellenwert ($\tau_{Schwelle}$) ist.

2. Radarsystem (1) nach Anspruch 1, wobei das Bestimmungsmodul ($24_n$) konfiguriert ist, um eine spektrale Leistungsdichte des sich auf dem Empfangsweg (20n) ausbreitenden Signals in Bezug auf das willkürliche Referenzsignal ($S_{Ref}$) zu bestimmen.

3. Radarsystem (1) nach einem der vorstehenden Ansprüche, wobei das Bestimmungsmodul ($24_n$) konfiguriert ist, um eine Integration auf mehrere aufeinanderfolgende Raster des sich auf dem Empfangsweg ($20_n$) ausbreitenden Signals anzuwenden.

4. Radarsystem (1) nach einem der vorstehenden Ansprüche, wobei das Radarsystem (1) weiter eine Kalibriervorrichtung (1C) umfasst, die N Kalibrierwege ($40_n$) umfasst, und wobei die Kalibriervorrichtung (1C) für jeden Kalibrier-weg ($40_n$) konfiguriert ist, um Korrekturkoeffizientenwerte ($C_n(F)$) des umgewandelten Signals ($S_n$) zu bestimmen, um jeden der Empfangswege ($20_n$) des Radarsystems (1) in Amplitude und Phase auszugleichen.

5. Radarsystem (1) nach einem der vorstehenden Ansprüche, wobei das Radarsystem (1) konfiguriert ist, um eine Frequenzabtastung durch Wiederholen der Bewertung der Erkennung von besetzten Frequenzkanälen in Bezug auf den Erkennungsschwellenwert ($\tau_{Schwelle}$) anzuwenden, um eine gesamte Frequenz-Domäne von vordefiniertem Interesse abzudecken.

6. Radarsystem (1) nach einem der vorstehenden Ansprüche, wobei das Radarsystem (1) konfiguriert ist, um eine Richtantennenrichtung ($\theta_{E0}$, $\theta_{C0}$) anzuwenden, und wobei das Bewertungsmodul besetzter Frequenzkanäle (30) weiter angepasst ist, um Werte des Abweichungsweges ($\Delta C(F)$, $\Delta E(F)$) aus den Korrelationswerten ($R_n(F)$) der N Empfangswege, danach Werte des Verhältnisses des Abweichungsweges (Verhältnis$_C(F)$, Verhältnis$_E(F)$) aus den Werten des Summenweges ($\Sigma(F)$) und der Werte des Abweichungsweges ($\Delta C(F)$,$\Delta E(F)$) zu bestimmen, wobei die Richtantennenrichtung ($\theta_{E0}$, $\theta_{C0}$) der Ankunftsrichtung der empfangenen Signale ($Sr_n$) in Bezug auf die Ausrichtung der Antennen des Radarsystems (1) entspricht, wenn die Werte des Verhältnisses des Abweichungsweges (Verhältnis$_C$(F), Verhältnis$_E$(F)) kleiner als ein vordefinierter Keulenschwellenwert ($\varepsilon_{Keule}$) sind.

7. Radarsystem (1) nach Anspruch 6, wobei das Bewertungsmodul besetzter Frequenzkanäle (30) weiter angepasst ist, um mindestens eine verfeinerte Ankunftsrichtung ($\theta_{ESchätz}$, $\theta_{CSchätz}$) der empfangenen Signale in Bezug auf die Ausrichtung der Antennen des Radarsystems (1) aus den Werten des Verhältnisses des Abweichungsweges (Verhältnis$_C$(F), Verhältnis$_E$(F)) und der Richtantennenrichtung ($\theta_{E0}$, $\theta_{C0}$) zu bestimmen.

8. Radarsystem (1) nach einem der Ansprüche 6 oder 7, wobei das Radarsystem (1) konfiguriert ist, um eine Frequenzabtastung durch Wiederholen der Bewertung der Ankunftsrichtung der empfangenen Signale in Bezug auf den Keulenschwellenwert $\varepsilon_{Keule}$ anzuwenden, um eine gesamte Winkel-Domäne von vordefiniertem Interesse abzudecken.

9. Radarsystem (1) nach einem der vorstehenden Ansprüche, wobei das Radarsystem (1) eine betrieblich auf "Abhören" befindliche Konfiguration in der Frequenz-Domäne von Funkfrequenzen des Typs "Band X" umfasst.

10. Verfahren zum Erkennen besetzter Frequenzkanäle, das von einem Radarsystem (1) umgesetzt wird, das N Empfangswege ($20_n$) umfasst, wobei N eine ganze Zahl größer oder gleich 2 ist, wobei das Verfahren den Empfang im Bereich eines jeden Weges von Signalen ($Sr_n$) umfasst, **dadurch gekennzeichnet, dass** das Verfahren für jeden Empfangsweg ($20_n$) die folgenden Schritte umfasst, bestehend aus:

   - Umwandeln (620), in der Spektral-Domäne, der empfangenen Signale ($Sr_n$), um N umgewandelte Signale ($S_n$) zu bilden, die jeweils auf einem gegebenen momentanen Frequenzband definiert sind, das einer Anordnung von Frequenzkanälen (F) zugeordnet ist.
   - Bestimmen (640) der Korrelationswerte ($R_n$(F)) durch Anwenden einer Leistungskorrelation zwischen dem Spektrum des umgewandelten Signals ($S_n$), das sich auf dem Empfangsweg ($20_n$) ausbreitet und dem Spektrum eines willkürlichen Referenzsignals ($S_{Ref}$), das aus einem der sich auf einem der Empfangswege ausbreitenden umgewandelten Signale ausgewählt wird,

   wobei das Verfahren weiter eine Bewertung der besetzten Frequenzkanäle umfasst, umfassend die Schritte, bestehend aus:

   - Bestimmen (660) der Werte des Summenweges ($\Sigma$(F)) aus den Korrelationswerten ($R_n$(F)) der N Empfangswege,
   - Vergleichen (680) des Wertes des Summenweges ($\Sigma$(F)), der einem vordefinierten Erkennungsschwellenwert ($\tau_{Schwelle}$) zugeordnet ist, und
   - Bestimmen, dass der Frequenzkanal (F) besetzt (682) ist, wenn der Wert des zugeordneten Summenweges ($\Sigma$(F)) größer als der vordefinierte Erkennungsschwellenwert ($\tau_{Schwelle}$) ist.

## Claims

1. Radar system (1) for detecting occupied frequency channels, the system comprising N receiving paths ($20_n$) and a set (10) of radar antennas associated with each path, N being an integer greater than or equal to 2, each path being capable of receiving respectively signals ($Sr_n$) by means of the associated radar antenna, the radar system (1) comprising, for each receiving path ($20_n$), a conversion unit ($22_n$) in the spectral domain of said received signals ($Sr_n$) to form a converted signal ($S_n$) defined on a given instantaneous frequency band associated with a set of frequency channels (F), and a module ($24_n$) for determining correlation values ($R_n$( F)) **characterised in that** it is adapted to apply a power correlation between the spectrum of the converted signal ($S_n$) propagated over said receiving path ($20_n$) and the spectrum of an arbitrary reference signal ($S_{ref}$) chosen from among one of the converted signals propagated over one of said receiving paths, the radar system (1) further comprising a module (30) for evaluating occupied frequency channels adapted to determine the values of the sum path ($\Sigma$(F)) from the correlation values ($R_n$(F)) of said N receiving paths, the frequency channel (F) being occupied if the value of the associated sum path ($\Sigma$(F)) is greater than a predefined detection threshold value ($\tau_{threshold}$).

2. Radar system (1) according to claim 1, wherein said determination module ($24_n$) is configured to determine a power spectral density of the signal propagated over said receiving path (20n) with respect to said arbitrary reference signal ($S_{ref}$).

3.  Radar system (1) according to any one of the preceding claims, wherein said determination module ($24_n$) is configured to apply an integration on several successive frames of the signal propagated over said receiving path ($20_n$).

4.  Radar system (1) according to any one of the preceding claims, wherein the radar system (1) further comprises a calibration device (1C) comprising N calibration paths ($40_n$), and wherein, for each calibration path ($40_n$), the calibration device (1C) is configured to determine correction coefficient values ($C_n(F)$) of said converted signal ($S_n$) to balance, in amplitude, and in phase, each of said receiving paths ($20_n$) of the radar system (1).

5.  Radar system (1) according to any one of the preceding claims, wherein said radar system (1) is configured to apply a frequency scan by repeating the evaluation of the detection of occupied frequency channels with respect to said detection threshold value ($\tau_{threshold}$), to totally cover a predefined interest frequency domain.

6.  Radar system (1) according to any one of the preceding claims, wherein the radar system (1) is configured to apply a pointing antenna direction ($\theta_{E0}$, $\theta_{C0}$), and wherein said module for evaluating occupied frequency channels (30) is further adapted to determine the values of the deviation path ($\Delta C(F), \Delta E(F)$) from the correlation values ($R_n(F)$) of said N receiving paths, then the values of the ratio of the deviation path ($ratio_C(F)$, $ratio_E(F)$) from said values of the sum path ($\Sigma(F)$) and of said values of the deviation path ($\Delta C(F), \Delta E(F)$), said pointing antenna direction ($\theta_{E0}$, $\theta_{C0}$) corresponding to the arrival direction of the received signals ($Sr_n$) with respect to the orientation of said antennas of the radar system (1) if said values of the ratio of the deviation path ($ratio_C(F)$, $ratio_E(F)$) are less than a predefined lobe threshold value ($\varepsilon_{lobe}$).

7.  Radar system (1) according to claim 6, wherein said module for evaluating occupied frequency channels (30) is further adapted to determine at least one refined arrival direction ($\theta_{Eestim}$, $\theta_{Cestim}$) of the received signals with respect to the orientation of said antennas of the radar system (1) from said values of the ratio of the deviation path ($ratio_C(F)$, $ratio_E$ (F)) and of said pointing antenna direction ($\theta_{E0}, \theta_{C0}$)·

8.  Radar system (1) according to any one of claims 6 or 7, wherein said radar system (1) is configured to apply a spatial scan by repeating the evaluation of the arrival direction of the received signals with respect to said lobe threshold value $\varepsilon_{lobe}$, to totally cover a predefined interest angular domain.

9.  Radar system (1) according to any one of the preceding claims, wherein the radar system (1) comprises an operationally "listening" configuration in the "band X"-type radiofrequency frequency domain.

10. Method for detecting occupied frequency channels, implemented in a radar system (1) comprising N receiving paths ($20_n$), N being an integer greater than or equal to 2, the method comprising the receiving, at each path, of signals ($Sr_n$), **characterized in that** said method comprises, for each receiving path ($20_n$) the following steps consisting of:

    - converting (620), into the spectral domain, the received signals ($Sr_n$) to form N converted signals ($S_n$), each defined over a given instantaneous frequency band, associated with a set of frequency channels (F),
    - determining (640) correlation values ($R_n(F)$) by applying a power correlation between the spectrum of the converted signal ($S_n$) propagated over said receiving path ($20_n$) and the spectrum of an arbitrary reference signal ($S_{ref}$) chosen from among one of the converted signals propagated over one of said receiving paths,

    the method further comprising an evaluation of the occupied frequency channels comprising the steps consisting of:

    - determining (660) the values of the sum path ($\Sigma(F)$) from the correlation values ($R_n(F)$) of said N receiving paths,
    - comparing (680) the value of the sum path ($\Sigma(F)$) associated with a predefined detection threshold value ($\tau_{threshold}$), and
    - determining that the frequency channel (F) is occupied (682) if the value of the associated sum path ($\Sigma(F)$) is greater than said predefined detection threshold value ($\tau_{threshold}$).

**[Fig.1]**

[Fig.2]

**(a)**

$S_n$ $\longrightarrow$ $24\text{-}1_n$ $\longrightarrow$ $24\text{-}3_n$ $\longrightarrow$ $R_n$

$S_{ref}$

$24_n$

**(b)**

$C_n$

$S_n$ $\longrightarrow$ $\otimes$ $\xrightarrow{Sc_n}$ $24\text{-}1_n$ $\longrightarrow$ $24\text{-}3_n$ $\longrightarrow$ $R_n$

$S_{ref}$

$24_n$

[Fig.3]

[Fig.4]

(a)

$S_0$

64

$S_0$ → | 64-1 | → | 64-3 | → $SC_0$

(b)

$S_0$

$44_n$

$S_0$

$S_n$ → | $44\text{-}1_n$ | → | $44\text{-}3_n$ | → | $44\text{-}5_n$ | → $C_n$

[Fig.5]

| 1 | 2 |
|---|---|
| 3 | 4 |

**[Fig.6]**

Recevoir des signaux $Sr_n$ sur chaque voie de réception $20_n$ — 600

↓

Convertir dans le domaine spectral les signaux reçus $Sr_n$ en des signaux convertis $S_n$ pour chaque voie de réception $20_n$ — 620

↓

Déterminer la corrélation de puissance $R_n$ pour chaque voie de réception $20_n$, par rapport à une voie de référence arbitraire — 640

↓

Calculer les valeurs de la voie somme
$$\sum(F) = \sum_N R_n(F)$$ — 660

↓

680 — $\sum(F) > \tau_{seuil}$ —non→ Canal fréquentiel F <u>libre</u> de la bande fréquentielle instantanée BF - Pas de détection — 684

↓ oui

Canal fréquentiel F <u>occupé</u> de la bande fréquentielle instantanée BF — 682

**[Fig.7]**

Appliquer la direction d'antenne de pointage $(\theta_{E0}, \theta_{C0})$ —— 700

Calculer les valeurs de la voie écart (en circulaire et en élévation) à partir la corrélation de puissance $R_n$ —— 720

$$\Delta C(F) = \sum_n w_c(n).R_n(F) \; ; \quad \Delta E(F) = \sum_n w_E(n).R_n(F)$$

Calculer les valeurs de ratio de la voie écart (en circulaire et en élévation) à partir des valeurs de la voie écart et de la voie somme —— 740

$$ratio_C(F) = \frac{\Delta C(F)}{\Sigma(F)} \; ; \quad ratio_E(F) = \frac{\Delta E(F)}{\Sigma(F)}$$

760

$|ratio_C(F)| < \varepsilon_{lobe}$
ET
$|ratio_E(F)| < \varepsilon_{lobe}$

non

764 — La direction de pointage ne correspond pas à la direction d'arrivée du signal détecté

oui

Calculer la direction affinée d'arrivée du signal S(t) détecté —— 762

$$\theta_{E_{estim}} = asin\left[sin(\theta_{E0}) + \left(\sum_{i=0}^{J} a_i \times ratio_E(F)^i\right)\right];$$

$$\theta_{C_{estim}} = asin\left[\frac{1}{cos(\theta_{E_{estim}})} \times \left[(cos(\theta_{E0}).\,sin(\theta_{C0})) + \left(\sum_{i=0}^{J} a_i \times ratio_C(F)^i\right)\right]\right]$$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5565764 A
- FR 3073627 A1
- EP 4239903 A1